# EUROPÄISCHE PATENTSCHRIFT

(11) **EP 3 713 039 B1**
(45) Veröffentlichungstag und Bekanntmachung des Hinweises auf die Patenterteilung: **16.03.2022**
(21) Anmeldenummer: 20157548.7
(22) Anmeldetag: 17.02.2020
(51) Int. Cl.: H02J 7/00

(54) **STEUERUNGSEINHEIT**
CONTROL UNIT
UNITÉ DE COMMANDE

(30) Priorität: 18.03.2019 DE 102019106742
(43) Veröffentlichungstag der Anmeldung: 23.09.2020
(73) Patentinhaber: Miele & Cie. KG, 33332 Gütersloh (DE)
(72) Erfinder: Windhövel, Sebastian, 59302 Oelde-Stromberg (DE); Walfort, Dennis, 33604 Bielefeld (DE)

(56) Entgegenhaltungen:
- DE-A1-102017 004 069

## Beschreibung

Die Erfindung betrifft eine Steuerungseinheit zum Steuern eines Ladevorgangs eines wiederaufladbaren Speichermoduls für elektrische Energie eines Haushaltsgeräts, mit einer Detektionseinrichtung, welche dazu eingerichtet ist, die aktuelle Kapazität und/oder den aktuellen Ladezustand des Speichermoduls vor dem Ladevorgang und/oder während des Ladevorgangs zu erfassen, und einer Abschalteinrichtung, welche dazu eingerichtet ist, einen Ladevorgang des Speichermoduls zu beenden, wenn ein Zielladezustand oder eine Zielkapazität am Speichermodul erreicht ist.

Ferner betrifft die Erfindung ein Ladegerät zum Aufladen eines wiederaufladbaren Speichermoduls für elektrische Energie eines Haushaltsgeräts, mit einem Versorgungsanschluss, welcher dazu eingerichtet ist, elektrisch leitfähig mit einer elektrischen Energiequelle verbunden zu werden, einem Ladeanschluss, welcher dazu eingerichtet ist, elektrisch leitfähig mit einem wiederaufladbaren Speichermodul für elektrische Energie eines Haushaltsgeräts verbunden zu werden, und einer Steuerungseinheit, welche dazu eingerichtet ist, den Ladevorgang des Speichermoduls zu steuern.

Außerdem betrifft die Erfindung ein Haushaltsgerät mit einem wiederaufladbaren Speichermodul für elektrische Energie und einer Steuerungseinheit, welche dazu eingerichtet ist, den Ladevorgang des Speichermoduls zu steuern.

Darüber hinaus betrifft die Erfindung ein Verfahren zum Steuern eines Ladevorgangs eines wiederaufladbaren Speichermoduls für elektrische Energie eines Haushaltsgeräts mittels einer Steuerungseinheit, mit den Schritten: Erfassen der aktuellen Kapazität und/oder des aktuellen Ladezustands des Speichermoduls vor dem Ladevorgang und/oder während des Ladevorgangs mittels einer Detektionseinrichtung der Steuerungseinheit und Beenden eines Ladevorgangs des Speichermoduls mittels einer Abschalteinrichtung, wenn ein Zielladezustand oder eine Zielkapazität am Speichermodul erreicht ist.

Mobile bzw. portable Haushaltsgeräte sind häufig mit einem Speichermodul für elektrische Energie ausgestattet, sodass ein Betrieb dieser Haushaltsgeräte ohne eine kabelgebundene Leistungsversorgung erfolgen kann. Die Speichermodule entsprechender Haushaltsgeräte werden dabei üblicherweise in unregelmäßigen Abständen wiederaufgeladen, damit für den kabellosen Betrieb des Haushaltsgeräts stets ausreichend Energie zur Verfügung steht.

Zum Aufladen der Speichermodule moderner Haushaltsgeräte kommen üblicherweise Ladegeräte zum Einsatz, welche an das Batteriemanagementsystem (BMS) des Haushaltsgeräts anzuschließen sind. Das Ladegerät stellt während des Ladevorgangs einen konstanten Ladestrom zur Verfügung, wobei gegen Ende des Ladevorgangs üblicherweise eine konstante Ladespannung bereitgestellt wird.

Bisher werden die Speichermodule entsprechender Haushaltsgeräte während des Ladevorgangs derart aufgeladen, dass stets der maximale Ladezustand des Speichermoduls erreicht wird, sofern es nicht zu einer manuellen Unterbrechung des Ladevorgangs kommt. Der Ladezustand eines Speichermoduls kann auch als State of Charge (SoC) bezeichnet werden und beschreibt die aktuelle Kapazität eines Speichermoduls als Prozentangabe im Verhältnis zu der maximalen Kapazität des Speichermoduls.

Aufgrund des sich bei jedem Ladevorgang ergebenden hohen Ladungsniveaus des Speichermoduls wird - insbesondere bei den weit verbreiteten Lithium-Ionen-Akkumulatoren - die Alterung des Speichermoduls begünstigt. Im Rahmen der Alterung kommt es zu Kapazitätsverlusten des Speichermoduls und somit zu verkürzten Gerätelaufzeiten. Der Benutzer entsprechender Haushaltsgeräte nimmt die sich verkürzenden Gerätelaufzeiten wahr, sodass ein negativer Qualitätseindruck beim Benutzer erweckt wird. Darüber hinaus führt das regelmäßige Erreichen und länger andauernde Halten hoher Ladungsniveaus zu einer Verringerung der Lebensdauer entsprechender Speichermodule.

Die der Erfindung zugrundeliegende Aufgabe besteht somit darin, konstante Gerätelaufzeiten nach dem Aufladen eines Speichermoduls eines Haushaltsgeräts über einen längeren Zeitraum gewährleisten zu können, so dass die für den Benutzer bemerkbare Alterung des Speichermoduls verlangsamt wird. Eine zusätzliche Aufgabe besteht darin, die Alterung des Speichermoduls zu verlangsamen oder zumindest möglichst weit zu späteren Zeitpunkten der Lebensdauer des Speichermoduls zu verschieben.

Die Aufgabe wird gelöst durch eine Steuerungseinheit der eingangs genannten Art, wobei die erfindungsgemäße Steuerungseinheit dazu eingerichtet ist, den Zielladezustand des Speichermoduls mit zunehmenden Kapazitätsverlusten des Speichermoduls zu erhöhen und/oder die Zielkapazität des Speichermoduls mit zunehmenden Kapazitätsverlusten des Speichermoduls beizubehalten.

Die Erfindung macht sich die Erkenntnis zunutze, dass zunehmende Kapazitätsverluste von wiederaufladbaren Speichermodulen für elektrische Energie durch das Erhöhen des Zielladezustands ausgeglichen werden können. Hierzu ist es erforderlich, dass der anfängliche Zielladezustand kleiner als 100 % ist. Beispielsweise kann ein anfänglicher Zielladezustand bei 80 % liegen, sodass der Zielladezustand über die Zeit auf bis zu 100 % erhöht werden kann, um zunehmende Kapazitätsverluste des Speichermoduls auszugleichen. Die Gerätelaufzeit eines Haushaltsgeräts, welches unter Verwendung einer solchen Steuerungseinheit geladen wird, weist somit über einen langen Zeitraum und viele Ladezyklen eine konstante Gerätelaufzeit auf. Der gleiche Effekt kann erreicht werden, wenn die Zielkapazität beim Ladevorgang auch mit zunehmenden Kapazitätsverlusten des Speichermoduls beibehalten wird. Hierfür ist es jedoch erforderlich, dass die Zielkapazität unterhalb der anfänglichen Maximalkapazität des Speichermoduls liegt. Nur auf diese Weise kann die Zielkapazität auch bei auftretenden Kapazitätsverlusten des Speichermoduls beibehalten werden.

Die Steuerungseinheit kann als Laderegler ausgebildet sein. Das Speichermodul kann beispielsweise mehrere Speicherzellen für elektrische Energie aufweisen, wobei die mehreren Speicherzellen elektrisch leitfähig miteinander verbunden sein können. Das Speichermodul kann beispielsweise ein Lithium-Ionen-Akku sein.

In einer bevorzugten Ausführungsform der erfindungsgemäßen Steuerungseinheit ist die Detektionseinrichtung dazu eingerichtet, vor dem Ladevorgang die zur Erreichung der Zielkapazität des Speichermoduls in das Speichermodul einzubringende Ladungsmenge zu ermitteln und während des Ladevorgangs die in das Speichermodul eingebrachte Ladungsmenge zu erfassen. Vorzugsweise ist in der Steuerungseinheit die Zielkapazität als konkreter Wert hinterlegt. Die Zielkapazität bezieht sich beispielsweise auf eine Ladungsmenge, welche zur Umsetzung einer Ziellaufzeit des Haushaltsgeräts erforderlich ist. Die zur Erreichung der Zielkapazität des Speichermoduls in das Speichermodul einzubringende Ladungsmenge ergibt sich somit aus der Differenz zwischen der Zielkapazität des Speichermoduls und der aktuellen Kapazität des Speichermoduls vor dem Ladevorgang.

In einer weiteren bevorzugten Ausführungsform der erfindungsgemäßen Steuerungseinheit ist die Detektionseinrichtung dazu eingerichtet, die Anzahl bereits erfolgter Lade-/Entladevorgänge zu erfassen und zu speichern. Diese Anzahl kann verwendet werden, um den alterungsbedingten Kapazitätsverlust abzuschätzen, ohne diesen explizit zu messen. Beispielsweise kann dazu für ein Speichermodul über eine einfache mathematische Vorschrift aus der Anzahl der Ladevorgänge die Restkapazität berechnet werden.

In einer weiteren bevorzugten Ausführungsform kann nach jedem Ladevorgang die Kapazität erfasst und daraus der alterungsbedingte Kapazitätsverlust bestimmt werden.

In einer weiteren bevorzugten Ausführungsform der erfindungsgemäßen Steuerungseinheit ist die Detektionseinrichtung dazu eingerichtet, die Kapazitätsverluste des Speichermoduls auf Grundlage der Veränderung eines oder mehrerer Ladeparameter bei aufeinanderfolgenden Ladevorgängen zu ermitteln. Die der Ermittlung zugrunde gelegten Ladevorgänge müssen nicht zwangsläufig unmittelbar aufeinander folgen. Ein Ladeparameter kann beispielsweise die erforderliche Ladezeit bis zur Erreichung eines Zielladezustands sein.

In einer Weiterbildung der erfindungsgemäßen Steuerungseinheit ist die Detektionseinrichtung dazu eingerichtet, den zeitbezogenen Ladezustandsanstieg des Speichermoduls während des Ladevorgangs des Speichermoduls zu ermitteln. Der zeitbezogene Ladezustandsanstieg betrifft die prozentuale Zunahme des Ladezustands pro Zeiteinheit. Beispielsweise kann ein zeitbezogener Ladezustandsanstieg ein Prozent pro Minute betragen. Die Kapazitätsverluste des Speichermoduls können auf Grundlage der Veränderung des zeitbezogenen Ladezustandsanstiegs des Speichermoduls ermittelt werden. Wenn es zu einem Kapazitätsverlust des Speichermoduls kommt, verändert sich der zeitbezogene Ladezustandsanstieg des Speichermoduls, sodass eine Erhöhung des Zielladezustands des Speichermoduls erforderlich ist, um eine konstante Gesamtlaufzeit des Haushaltsgeräts beibehalten zu können.

In einer weiteren bevorzugten Ausführungsform der erfindungsgemäßen Steuerungseinheit ist diese dazu eingerichtet, den Zielladezustand des Speichermoduls in Abhängigkeit des ermittelten zeitbezogenen Ladezustandsanstiegs des Speichermoduls zu erhöhen. Die Erhöhung des Zielladezustands des Speichermoduls erfolgt vorzugsweise unter Berücksichtigung des ermittelten zeitbezogenen Ladezustandsanstiegs und eines Erhöhungsfaktors.

Die der Erfindung zugrundeliegende Aufgabe wird ferner durch ein Ladegerät der eingangs genannten Art gelöst, wobei die Steuerungseinheit des erfindungsgemäßen Ladegeräts nach einer der vorstehend beschriebenen Ausführungsformen ausgebildet ist. Hinsichtlich der Vorteile und Modifikationen des erfindungsgemäßen Ladegeräts wird auf die Vorteile und Modifikationen der erfindungsgemäßen Steuerungseinheit verwiesen.

Die der Erfindung zugrundeliegende Aufgabe wird ferner durch ein Haushaltsgerät der eingangs genannten Art gelöst, wobei die Steuerungseinheit des erfindungsgemäßen Haushaltsgeräts nach einer der vorstehend beschriebenen Ausführungsformen ausgebildet ist. Hinsichtlich der Vorteile und Modifikationen des erfindungsgemäßen Haushaltsgeräts wird zunächst auf die Vorteile und Modifikationen der erfindungsgemäßen Steuerungseinheit verwiesen.

Das Haushaltsgerät ist vorzugsweise ein mobiles bzw. portables Haushaltsgerät. Das Haushaltsgerät kann beispielsweise als Akku-Sauger ausgebildet sein. Der Akku-Sauger kann ein Akku-Handsauger oder ein Akku-Bodensauger sein. Das Haushaltsgerät kann ferner auch ein anderer Haushaltsgerätetyp sein, bei welchem ein entsprechendes Speichermodul eingesetzt wird. Vorzugsweise weist das Haushaltsgerät einen oder mehrere Verbraucher von elektrischer Energie auf, wobei das Speichermodul dazu eingerichtet ist, dem einen oder den mehreren Verbrauchern elektrische Energie bereitzustellen.

In einer bevorzugten Ausführungsform des erfindungsgemäßen Haushaltsgeräts ist die Detektionseinrichtung der Steuerungseinheit dazu eingerichtet, die ladezustandsabhängige Gerätelaufzeit des Haushaltsgeräts zu erfassen, wobei die Steuerungseinheit vorzugsweise dazu eingerichtet ist, den Zielladezustand des Speichermoduls in Abhängigkeit der erfassten ladezustandsabhängigen Gerätelaufzeit des Haushaltsgeräts zu erhöhen. Die ladezustandsabhängige Gerätelaufzeit des Haushaltsgeräts betrifft die prozentuale Entladung des Speichermoduls über die Gerätelaufzeit. Beispielsweise kann eine ladezustandsabhängige Gerätelaufzeit des Haushaltsgeräts zehn Minuten Gerätelaufzeit pro Ladungsprozent betragen. Wenn es zu einem Kapazitätsverlust des Speichermoduls kommt, verändert sich die ladezustandsabhängige Gerätelaufzeit des Haushaltsgeräts, sodass eine Erhöhung des Zielladezustands des Speichermoduls erforderlich ist, um eine konstante Gesamtlaufzeit des Haushaltsgeräts beibehalten zu können.

Die der Erfindung zugrundeliegende Aufgabe wird ferner durch ein Verfahren der eingangs genannten Art gelöst, wobei im Rahmen des erfindungsgemäßen Verfahrens der Zielladezustand des Speichermoduls mit zunehmenden Kapazitätsverlusten des Speichermoduls erhöht wird, und/oder die Zielkapazität des Speichermoduls mit zunehmenden Kapazitätsverlusten des Speichermoduls beibehalten wird. Hinsichtlich der Vorteile und Modifikationen des erfindungsgemäßen Verfahrens wird zunächst auf die Vorteile und Modifikationen der erfindungsgemäßen Steuerungseinheit und des erfindungsgemäßen Haushaltsgeräts verwiesen.

In einer bevorzugten Ausführungsform des erfindungsgemäßen Verfahrens wird die zur Erreichung der Zielkapazität des Speichermoduls in das Speichermodul einzubringende Ladungsmenge vor dem Ladevorgang mittels der Detektionseinrichtung ermittelt und/oder die in das Speichermodul eingebrachte Ladungsmenge während des Ladevorgangs mittels der Detektionseinrichtung erfasst. Alternativ oder zusätzlich wird der zeitbezogene Ladezustandsanstieg des Speichermoduls während des Ladevorgangs des Speichermoduls mittels der Detektionseinrichtung ermittelt und/oder der Zielladezustand des Speichermoduls in Abhängigkeit des ermittelten zeitbezogenen Ladezustandsanstiegs des Speichermoduls erhöht. Alternativ oder zusätzlich wird die ladezustandsabhängige Gerätelaufzeit des Haushaltsgeräts mittels der Detektionseinrichtung ermittelt und/oder der Zielladezustand des Speichermoduls in Abhängigkeit der erfassten ladezustandsabhängigen Gerätelaufzeit des Haushaltsgeräts erhöht.

Ausführungsbeispiele der Erfindung sind in den Zeichnungen rein schematisch dargestellt und werden nachfolgend näher beschrieben. Es zeigen
- Fig. 1: ein Ausführungsbeispiel des erfindungsgemäßen Haushaltsgeräts mit einem dazugehörigen Ladegerät in einer schematischen Darstellung;
- Fig. 2: ein Ausführungsbeispiel des erfindungsgemäßen Ladegeräts mit einem dazugehörigen Haushaltsgerät in einer schematischen Darstellung; und
- Fig. 3: ein Steuerungsschema einer erfindungsgemäßen Steuerungseinheit in einer schematischen Diagrammdarstellung.

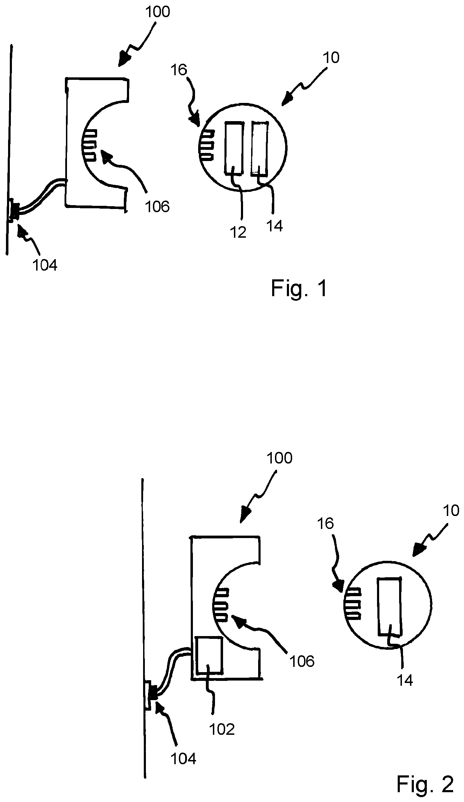

Die Fig. 1 zeigt ein als Saugroboter ausgebildetes Haushaltsgerät 10 mit einem wiederaufladbaren Speichermodul 14 für elektrische Energie und einer Steuerungseinheit 12, über welche der Ladevorgang des Speichermoduls 14 gesteuert wird.

Über den Ladeanschluss 16 kann das Haushaltsgerät 10 elektrisch leitfähig mit dem Ladeanschluss 106 eines Ladegeräts 100 verbunden werden, wobei das Ladegerät 100 zum Aufladen des wiederaufladbaren Speichermoduls 14 des Haushaltsgeräts 10 dient. Das Ladegerät 100 weist ferner einen als Netzstecker ausgebildeten Versorgungsanschluss 104 auf, welcher elektrisch leitfähig mit einer elektrischen Energiequelle verbunden ist. Die Steuerungseinheit 12 weist eine Detektionseinrichtung auf, über welche die aktuelle Kapazität des Speichermoduls 14 vor dem Ladevorgang und während des Ladevorgangs erfasst werden kann. Ferner weist die Steuerungseinheit 12 eine Abschalteinrichtung auf, welche den Ladevorgang des Speichermoduls 14 beendet, wenn eine Zielkapazität am Speichermodul 14 erreicht ist.

Über die Steuerungseinheit 12 wird der Ladevorgang des Speichermoduls 14 derart gesteuert, dass die Zielkapazität des Speichermoduls 14 mit zunehmenden Kapazitätsverlusten des Speichermoduls 14 beibehalten wird. Dies ist dadurch möglich, dass die Zielkapazität unterhalb der anfänglichen Maximalkapazität 200 des Speichermoduls 14 liegt. Dadurch, dass die Zielkapazität des Speichermoduls 14 auch bei zunehmenden Kapazitätsverlusten des Speichermoduls 14 beibehalten wird, nimmt der Benutzer des Haushaltsgeräts 10 die Kapazitätsverluste des Speichermoduls 14 nicht wahr, da es mit zunehmendem Gerätealter nicht zu einer Verringerung der Gerätelaufzeit 208 kommt.

Die Detektionseinrichtung der Steuerungseinheit 12 ermittelt hierzu vor dem Ladevorgang die zur Erreichung der Zielkapazität des Speichermoduls 14 in das Speichermodul 14 einzubringende Ladungsmenge. Außerdem wird die während des Ladevorgangs in das Speichermodul 14 eingebrachte Ladungsmenge erfasst. Die zur Erreichung der Zielkapazität des Speichermoduls 14 in das Speichermodul 14 einzubringende Ladungsmenge ergibt sich aus der Differenz zwischen der Zielkapazität des Speichermoduls 14 und der aktuellen Kapazität des Speichermoduls 14 vor dem Ladevorgang.

Das Speichermodul 14 ist vorliegend als Lithium-Ionen-Akku ausgebildet und umfasst mehrere Speicherzellen, welche elektrisch leitfähig miteinander verbunden sind.

Die Fig. 2 zeigt erneut ein als Saugroboter ausgebildetes Haushaltsgerät 10 und ein zum Aufladen des Speichermoduls 14 des Haushaltsgeräts 10 geeignetes Ladegerät 100.

Abweichend von der in Fig. 1 dargestellten Ausführungsform ist die Steuerungseinheit 102 nun Bestandteil des Ladegeräts 100. Die Detektionseinrichtung der Steuerungseinheit 102 dient zum Erfassen des aktuellen Ladezustands des Speichermoduls 14 während des Ladevorgangs. Die Abschalteinrichtung der Steuerungseinheit 102 dient zum Beenden des Ladevorgangs des Speichermoduls 14, wenn ein Zielladezustand 202 am Speichermodul 14 erreicht ist.

Der Ladevorgang des Speichermoduls 14 erfolgt dabei derart, dass der Zielladezustand 202 des Speichermoduls 14 mit zunehmenden Kapazitätsverlusten des Speichermoduls 14 erhöht wird. Dies ist dadurch möglich, dass der anfängliche Zielladezustand 202 kleiner als 100 % ist. Somit kann der Zielladezustand 202 zum Ausgleichen der Kapazitätsverluste mit zunehmender Lebensdauer erhöht werden, sodass eine gleichbleibende Gerätelaufzeit 208 des Haushaltsgeräts 10 umgesetzt wird. Der Benutzer des Haushaltsgeräts 10 nimmt auf diese Weise die zunehmenden Kapazitätsverluste des Speichermoduls 14 des Haushaltsgeräts nicht wahr.

Die Detektionseinrichtung der Steuerungseinheit 102 ist dazu eingerichtet, den zeitbezogenen Ladezustandsanstieg des Speichermoduls 14 während des Ladevorgangs des Speichermoduls 14 zu ermitteln. Kapazitätsverluste des Speichermoduls führen zu einer Veränderung des zeitbezogenen Ladezustandsanstiegs des Speichermoduls 14 während des Ladevorgangs des Speichermoduls 14. Die Steuerungseinheit 102 erhöht zum Ausgleich der Kapazitätsverluste des Speichermoduls 14 den Zielladezustand 202 des Speichermoduls 14 in Abhängigkeit des ermittelten zeitbezogenen Ladezustandsanstiegs des Speichermoduls 14. Hierbei wird neben dem ermittelten zeitbezogenen Ladezustandsanstieg ein Erhöhungsfaktor berücksichtigt.

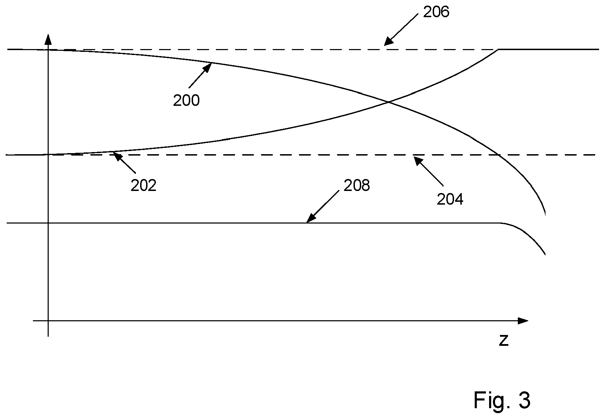

Die Fig. 3 zeigt, dass sich die Maximalkapazität 200 eines wiederaufladbaren Speichermoduls 14 mit der Anzahl der Ladezyklen Z verringert. Damit trotz der sich verringernden Maximalkapazität 200 des Speichermoduls 14 eine konstante Gerätelaufzeit 208 des Haushaltsgeräts 10 umgesetzt werden kann, ist eine Erhöhung des Zielladezustands 202 erforderlich. In dem dargestellten Steuerungsschema erfolgt eine Erhöhung des Zielladezustands 202 von einem ersten Ladezustandsniveau 204 bis hin zu einem zweiten Ladezustandsniveau 206. Das erste Ladezustandsniveau 204 kann beispielsweise 80% betragen. Das zweite Ladezustandsniveau 206 kann beispielsweise 100 % betragen.

Der anfängliche Zielladezustand 202 liegt in diesem Fall somit bei 80%. Das Speichermodul 14 wird im Rahmen des Ladevorgangs anfänglich also nicht vollständig aufgeladen. Dies ermöglicht es, dass der sich mit der zunehmenden Anzahl von Ladezyklen ergebende Kapazitätsverlust, welcher zu einer Verringerung der Maximalkapazität 200 führt, ausgeglichen werden kann, indem der Zielladezustand 202 in entsprechender Weise angehoben wird.

Sobald der Zielladezustand 202 den Wert 100% erreicht hat, können zukünftige Kapazitätsverluste des Speichermoduls nicht länger ausgeglichen werden. In diesem Fall kommt es dann zu einer Verringerung der Gerätelaufzeit 208. Bis zu diesem Zeitpunkt kann jedoch eine konstante Gerätelaufzeit 208 umgesetzt werden, sodass der Benutzer des Haushaltsgeräts 10 die Kapazitätsverluste des Speichermoduls 14 des Haushaltsgeräts 10 nicht wahrnimmt.

Beim Erreichen des maximalen Ladezustands können Akkumulatoren verstärkter Alterung ausgesetzt sein. Dieser Effekt wird durch länger andauerndes Halten dieses Zustands entsprechend ebenfalls verlängert bzw. verstärkt. Da gemäß der Erfindung die volle Kapazität anfänglich nicht ausgeschöpft wird, kann die Alterung gegenüber einem Akkumulator verlangsamt werden, der stets auf 100% Kapazität aufgeladen wird. So kann neben der durch den Benutzer wahrgenommenen länger gleichbleibenden Kapazität auch die tatsächliche Kapazität des Akkumulators über seine Lebensdauer insgesamt erhöht werden bzw. die Alterung hinausgezögert werden.

Die Kapazitätsverluste des Speichermoduls 14 können beispielsweise über den zeitbezogenen Ladezustandsanstieg des Speichermoduls 14 ermittelt werden. In diesem Fall kann der Zielladezustand 202 des Speichermoduls in Abhängigkeit des ermittelten zeitbezogenen Ladezustandsanstiegs des Speichermoduls 14 und unter Berücksichtigung eines geeigneten Erhöhungsfaktors erhöht werden.

### Bezugszeichen

- 10: Haushaltsgerät
- 12: Steuerungseinheit
- 14: Speichermodul
- 16: Ladeanschluss

- 100: Ladegerät
- 102: Steuerungseinheit
- 104: Versorgungsanschluss
- 106: Ladeanschluss

- 200: Maximalkapazität
- 202: Zielladezustand
- 204: Ladezustandsniveau
- 206: Ladezustandsniveau
- 208: Gerätelaufzeit

- Z: Ladezyklen

## Patentansprüche

1. Steuerungseinheit (12, 102) zum Steuern eines Ladevorgangs eines wiederaufladbaren Speichermoduls (14) für elektrische Energie eines Haushaltsgeräts (10); mit
- einer Detektionseinrichtung, welche dazu eingerichtet ist, die aktuelle Kapazität und/oder den aktuellen Ladezustand des Speichermoduls (14) vor und/oder nach dem Ladevorgang und/oder während des Ladevorgangs zu erfassen; und
- einer Abschalteinrichtung, welche dazu eingerichtet ist, einen Ladevorgang des Speichermoduls (14) zu beenden, wenn ein Zielladezustand (202) oder eine Zielkapazität am Speichermodul (14) erreicht ist;
**dadurch gekennzeichnet, dass** der anfängliche Zielladezustand kleiner als 100 % ist und/oder die anfängliche Zielkapazität unterhalb der anfänglichen Maximalkapazität (200) des Speichermoduls liegt und dass die Steuerungseinheit (12, 102) dazu eingerichtet ist, den Zielladezustand (202) des Speichermoduls (14) mit zunehmenden Kapazitätsverlusten des Speichermoduls (14) bis zum Erreichen von 100 % zu erhöhen und/oder die Zielkapazität des Speichermoduls (14) mit zunehmenden Kapazitätsverlusten des Speichermoduls (14) bis zum Erreichen der aktuellen Maximalkapazität (200) beizubehalten.

2. Steuerungseinheit (12, 102) nach Anspruch 1,
**dadurch gekennzeichnet, dass** die Detektionseinrichtung dazu eingerichtet ist, vor dem Ladevorgang die zur Erreichung der Zielkapazität des Speichermoduls (14) in das Speichermodul (14) einzubringende Ladungsmenge zu ermitteln und während des Ladevorgangs die in das Speichermodul (14) eingebrachte Ladungsmenge zu erfassen.

3. Steuerungseinheit (12, 102) nach Anspruch 1 oder 2,
**dadurch gekennzeichnet, dass** die Detektionseinrichtung dazu eingerichtet ist, die Kapazitätsverluste des Speichermoduls (14) auf Grundlage der Veränderung eines oder mehrerer Ladeparameter bei aufeinanderfolgenden Ladevorgängen zu ermitteln.

4. Steuerungseinheit (12, 102) nach einem der vorstehenden Ansprüche,
**dadurch gekennzeichnet, dass** die Detektionseinrichtung dazu eingerichtet ist, den zeitbezogenen Ladezustandsanstieg des Speichermoduls (14) während des Ladevorgangs des Speichermoduls (14) zu ermitteln.

5. Steuerungseinheit (12, 102) nach Anspruch 4,
**dadurch gekennzeichnet, dass** die Steuerungseinheit (12, 102) dazu eingerichtet ist, den Zielladezustand (202) des Speichermoduls (14) in Abhängigkeit des ermittelten zeitbezogenen Ladezustandsanstiegs des Speichermoduls (14) zu erhöhen.

6. Ladegerät (100) zum Aufladen eines wiederaufladbaren Speichermoduls (14) für elektrische Energie eines Haushaltsgeräts (10); mit
- einem Versorgungsanschluss (104), welcher dazu eingerichtet ist, elektrisch leitfähig mit einer elektrischen Energiequelle verbunden zu werden;
- einem Ladeanschluss (106), welche dazu eingerichtet ist, elektrisch leitfähig mit einem wiederaufladbaren Speichermodul für elektrische Energie eines Haushaltsgeräts (10) verbunden zu werden; und
- einer Steuerungseinheit (102), welche dazu eingerichtet ist, den Ladevorgang des Speichermoduls (14) zu steuern;
**dadurch gekennzeichnet, dass** die Steuerungseinheit (102) nach einem der vorstehenden Ansprüche ausgebildet ist.

7. Haushaltsgerät (10), mit
- einem wiederaufladbaren Speichermodul (14) für elektrische Energie; und
- einer Steuerungseinheit (12), welche dazu eingerichtet ist, den Ladevorgang des Speichermoduls (14) zu steuern;
**dadurch gekennzeichnet, dass** die Steuerungseinheit (12) nach einem der Ansprüche 1 bis 5 ausgebildet ist.

8. Haushaltsgerät (10) nach Anspruch 7,
**dadurch gekennzeichnet, dass** die Detektionseinrichtung der Steuerungseinheit (12) dazu eingerichtet ist, die ladezustandsabhängige Gerätelaufzeit (208) des Haushaltsgeräts (10) zu erfassen, wobei die Steuerungseinheit (12) vorzugsweise dazu eingerichtet ist, den Zielladezustand (202) des Speichermoduls (14) in Abhängigkeit der erfassten ladezustandsabhängigen Gerätelaufzeit (208) des Haushaltsgeräts (10) zu erhöhen.

9. Verfahren zum Steuern eines Ladevorgangs eines wiederaufladbaren Speichermoduls (14) für elektrische Energie eines Haushaltsgeräts (10) mittels einer Steuerungseinheit (12, 102), insbesondere mittels einer Steuerungseinheit (12, 102) nach einem der Ansprüche 1 bis 5, mit den Schritten:
- Erfassen der aktuellen Kapazität und/oder des aktuellen Ladezustands des Speichermoduls (14) vor und/oder nach dem Ladevorgang und/oder während des Ladevorgangs mittels einer Detektionseinrichtung der Steuerungseinheit (12, 102); und
- Beenden eines Ladevorgangs des Speichermoduls (14) mittels einer Abschalteinrichtung, wenn ein Zielladezustand (202) oder eine Zielkapazität am Speichermodul (14) erreicht ist;
**dadurch gekennzeichnet, dass** der anfängliche Zielladezustand kleiner als 100 % ist und/oder die anfängliche Zielkapazität unterhalb der anfänglichen Maximalkapazität (200) des Speichermoduls liegt und dass der Zielladezustand (202) des Speichermoduls (14) mit zunehmenden Kapazitätsverlusten des Speichermoduls (14) bis zum Erreichen von 100 % erhöht wird und/oder die Zielkapazität des Speichermoduls (14) mit zunehmenden Kapazitätsverlusten des Speichermoduls (14) bis zum Erreichen der aktuellen Maximalkapazität (200) beibehalten wird.

10. Verfahren nach Anspruch 9,
**gekennzeichnet durch** zumindest einen der folgenden Schritte:
- Ermitteln der zur Erreichung der Zielkapazität des Speichermoduls (14) in das Speichermodul (14) einzubringenden Ladungsmenge vor dem Ladevorgang mittels der Detektionseinrichtung;
- Erfassen der während des Ladevorgangs in das Speichermodul (14) eingebrachten Ladungsmenge mittels der Detektionseinrichtung;
- Ermitteln des zeitbezogenen Ladezustandsanstiegs des Speichermoduls (14) während des Ladevorgangs des Speichermoduls (14) mittels der Detektionseinrichtung;
- Erhöhen des Zielladezustands (202) des Speichermoduls (14) in Abhängigkeit des ermittelten zeitbezogenen Ladezustandsanstiegs des Speichermoduls (14);
- Ermitteln der ladezustandsabhängigen Gerätelaufzeit (208) des Haushaltsgeräts (10) mittels der Detektionseinrichtung;
- Erhöhen des Zielladezustands (202) des Speichermoduls (14) in Abhängigkeit der erfassten ladezustandsabhängigen Gerätelaufzeit (208) des Haushaltsgeräts (10).

## Claims

1. Control unit (12, 102) for controlling a charging process of a rechargeable storage module (14) for electrical energy of a domestic appliance (10); comprising
- a detection device which is configured to detect the current capacity and/or the current charge state of the storage module (14) before and/or after the charging process and/or during the charging process; and
- a switch-off device which is configured to end a charging process of the storage module (14) when a target charge state (202) or a target capacity on the storage module (14) has been reached;
**characterised in that** the initial target charge state is less than 100% and/or the initial target capacity is below the initial maximum capacity (200) of the storage module and **in that** the control unit (12, 102) is configured to increase the target charge state (202) of the storage module (14) with increasing capacity losses of the storage module (14) until 100% has been reached and/or to maintain the target capacity of the storage module (14) with increasing capacity losses of the storage module (14) until the current maximum capacity (200) has been reached.

2. Control unit (12, 102) according to claim 1,
**characterised in that** the detection device is configured to determine the amount of charge to be introduced into the storage module (14) in order to reach the target capacity of the storage module (14) before the charging process and to detect the amount of charge introduced into the storage module (14) during the charging process.

3. Control unit (12, 102) according to either claim 1 or claim 2,
**characterised in that** the detection device is configured to determine the capacity losses of the storage module (14) on the basis of the change in one or more charging parameters during successive charging processes.

4. Control unit (12, 102) according to any of the preceding claims,
**characterised in that** the detection device is configured to determine the time-related increase in the charge state of the storage module (14) during the charging process of the storage module (14).

5. Control unit (12, 102) according to claim 4,
**characterised in that** the control unit (12, 102) is configured to increase the target charge state (202) of the storage module (14) on the basis of the determined time-related increase in the charge state of the storage module (14).

6. Charging device (100) for charging a rechargeable storage module (14) for electrical energy of a domestic appliance (10); comprising
- a supply connection (104) which is configured to be connected to an electrical energy source in an electrically conductive manner;
- a charging connection (106) which is configured to be connected to a rechargeable storage module for electrical energy of a domestic appliance (10) in an electrically conductive manner; and
- a control unit (102) which is configured to control the charging process of the storage module (14);
**characterised in that** the control unit (102) is designed according to any of the preceding claims.

7. Domestic appliance (10), comprising
- a rechargeable storage module (14) for electrical energy; and
- a control unit (12) which is configured to control the charging process of the storage module (14);
**characterised in that** the control unit (12) is designed according to any of claims 1 to 5.

8. Domestic appliance (10) according to claim 7,
**characterised in that** the detection device of the control unit (12) is configured to detect the charge-state-dependent appliance running time (208) of the domestic appliance (10), the control unit (12) preferably being configured to increase the target charge state (202) of the storage module (14) on the basis of the detected charge-state-dependent appliance running time (208) of the domestic appliance (10).

9. Method for controlling a charging process of a rechargeable storage module (14) for electrical energy of a domestic appliance (10) by means of a control unit (12, 102), in particular by means of a control unit (12, 102) according to any of claims 1 to 5, comprising the steps of:
- detecting the current capacity and/or the current charge state of the storage module (14) before and/or after the charging process and/or during the charging process by means of a detection device of the control unit (12, 102); and
- ending a charging process of the storage module (14) by means of a switch-off device when a target charge state (202) or a target capacity on the storage module (14) has been reached;
**characterised in that** the initial target charge state is less than 100% and/or the initial target capacity is below the initial maximum capacity (200) of the storage module and **in that** the target charge state (202) of the storage module (14) is increased with increasing capacity losses of the storage module (14) until 100% has been reached and/or the target capacity of the storage module (14) is maintained with increasing capacity losses of the storage module (14) until the current maximum capacity (200) has been reached.

10. Method according to claim 9,
**characterised by** at least one of the following steps:
- determining the amount of charge to be introduced into the storage module (14) in order to reach the target capacity of the storage module (14) before the charging process by means of the detection device;
- detecting the amount of charge introduced into the storage module (14) during the charging process by means of the detection device;
- determining the time-related increase in the charge state of the storage module (14) during the charging process of the storage module (14) by means of the detection device;
- increasing the target charge state (202) of the storage module (14) on the basis of the determined time-related increase in the charge state of the storage module (14);
- determining the charge-state-dependent appliance running time (208) of the domestic appliance (10) by means of the detection device;
- increasing the target charge state (202) of the storage module (14) on the basis of the detected charge-state-dependent appliance running time (208) of the domestic appliance (10).

## Revendications

1. Unité de commande (12, 102) permettant de commander un processus de charge d'un module de stockage (14) rechargeable pour l'énergie électrique d'un appareil électroménager (10) ; comportant
- un dispositif de détection qui est configuré pour détecter la capacité actuelle et/ou le niveau de charge actuel du module de stockage (14) avant et/ou après le processus de charge et/ou pendant le processus de charge ; et
- un dispositif de déconnexion qui est configuré pour arrêter un processus de charge du module de stockage (14) lorsqu'un niveau de charge cible (202) ou une capacité cible est atteint sur le module de stockage (14) ;
**caractérisée en ce que** le niveau de charge cible initial est inférieur à 100 % et/ou la capacité cible initiale est inférieure à la capacité maximale (200) initiale du module de stockage et que l'unité de commande (12, 102) est configurée pour mesurer le niveau de charge cible (202) du module de stockage (14) pour augmenter avec des pertes de capacité croissantes du module de stockage (14) jusqu'à atteindre 100 % et/ou pour maintenir la capacité cible du module de stockage (14) avec des pertes de capacité croissantes du module de stockage (14) jusqu'à atteindre la capacité maximale (200) actuelle.

2. Unité de commande (12, 102) selon la revendication 1,
**caractérisée en ce que** le dispositif de détection est configuré pour déterminer la quantité de charge à introduire dans le module de stockage (14) pour atteindre la capacité cible du module de stockage (14) avant le processus de charge et pour détecter la quantité de charge introduite dans le module de stockage (14) pendant le processus de charge.

3. Unité de commande (12, 102) selon la revendication 1 ou 2,
**caractérisée en ce que** le dispositif de détection est configuré pour déterminer les pertes de capacité du module de stockage (14) sur la base du changement d'un ou de plusieurs paramètres de charge au cours de processus de charge successifs.

4. Unité de commande (12, 102) selon l'une des revendications précédentes,
**caractérisée en ce que** le dispositif de détection est configuré pour déterminer l'augmentation dans le temps du niveau de charge du module de stockage (14) pendant le processus de charge du module de stockage (14).

5. Unité de commande (12, 102) selon la revendication 4,
**caractérisée en ce que** l'unité de commande (12, 102) est configurée pour augmenter le niveau de charge cible (202) du module de stockage (14) en fonction de l'augmentation déterminée dans le temps du niveau de charge du module de stockage (14).

6. Appareil de charge (100) permettant de charger un module de stockage (14) rechargeable pour l'énergie électrique d'un appareil électroménager (10) ; comportant
- un raccord d'alimentation (104) qui est conçu pour être relié de manière électriquement conductrice à une source d'énergie électrique ;
- un raccord de charge (106) qui est conçu pour être relié de manière électriquement conductrice à un module de stockage rechargeable pour l'énergie électrique d'un appareil électroménager (10) ; et
- une unité de commande (102) qui est configurée pour commander le processus de charge du module de stockage (14) ;
**caractérisé en ce que** l'unité de commande (102) est réalisée selon l'une des revendications précédentes.

7. Appareil électroménager (10), comportant
- un module de stockage (14) rechargeable pour l'énergie électrique ; et
- une unité de commande (12) qui est configurée pour commander le processus de charge du module de stockage (14) ;
**caractérisé en ce que** l'unité de commande (12) est réalisée selon l'une des revendications 1 à 5.

8. Appareil électroménager (10) selon la revendication 7,
**caractérisé en ce que** le dispositif de détection de l'unité de commande (12) est configuré pour détecter la durée de fonctionnement de l'appareil (208) dépendante du niveau de charge de l'appareil électroménager (10), l'unité de commande (12) étant de préférence configurée pour augmenter le niveau de charge cible (202) du module de stockage (14) en fonction de la durée de fonctionnement de l'appareil (208) dépendante du niveau de charge détectée de l'appareil électroménager (10).

9. Procédé de commande d'un processus de charge d'un module de stockage (14) rechargeable pour l'énergie électrique d'un appareil électroménager (10) au moyen d'une unité de commande (12, 102), en particulier au moyen d'une unité de commande (12, 102) selon l'une des revendications 1 à 5, comportant les étapes :
- de détection de la capacité actuelle et/ou du niveau de charge actuel du module de stockage (14) avant et/ou après le processus de charge et/ou pendant le processus de charge au moyen d'un dispositif de détection de l'unité de commande (12, 102) ; et
- d'arrêt d'un processus de charge du module de stockage (14) au moyen d'un dispositif de déconnexion lorsqu'un niveau de charge cible (202) ou une capacité cible est atteint sur le module de stockage (14) ;
**caractérisé en ce que** le niveau de charge cible initial est inférieur à 100 % et/ou la capacité cible initiale est inférieure à la capacité maximale (200) initiale du module de stockage et que le niveau de charge cible (202) du module de stockage (14) est augmenté avec des pertes de capacité croissantes du module de stockage (14) jusqu'à atteindre 100 % et/ou la capacité cible du module de stockage (14) est maintenue avec des pertes de capacité croissantes du module de stockage (14) jusqu'à atteindre la capacité maximale (200) actuelle.

10. Procédé selon la revendication 9,
**caractérisé par** au moins l'une des étapes suivantes :
- détermination de la quantité de charge à introduire dans le module de stockage (14) afin d'atteindre la capacité cible du module de stockage (14) avant le processus de charge au moyen du dispositif de détection ;
- détection de la quantité de charge introduite dans le module de stockage (14) pendant le processus de charge au moyen du dispositif de détection ;
- détermination de l'augmentation dans le temps du niveau de charge du module de stockage (14) pendant le processus de charge du module de stockage (14) au moyen du dispositif de détection ;
- augmentation du niveau de charge cible (202) du module de stockage (14) en fonction de l'augmentation déterminée dans le temps du niveau de charge du module de stockage (14) ;
- détermination de la durée de fonctionnement de l'appareil (208) dépendante du niveau de charge de l'appareil électroménager (10) au moyen du dispositif de détection ;
- augmentation du niveau de charge cible (202) du module de stockage (14) en fonction de la durée de fonctionnement de l'appareil (208) dépendante du niveau de charge détectée de l'appareil électroménager (10).
